# EUROPEAN PATENT APPLICATION

(11) **EP 4 163 151 A2**
(43) Date of publication of application: **12.04.2023**
(21) Application number: 22199954.3
(22) Date of filing: 06.10.2022
(51) Int. Cl.: B60N 2/28

(54) **CHILD CAR SEAT**

(30) Priority: 07.10.2021 IT 202100025496
(71) Applicant: L'Inglesina Baby S.p.A., 36077 Altavilla Vicentina (VI) (IT)
(72) Inventor: TOMASI, Ivan, 36051 CREAZZO VI (IT); SCALDAFERRO, Dario, 36030 COSTABISSARA VI (IT); GORZA, Roberto, 32034 PEDAVENA BL (IT); DAL MASO, Paolo, 36071 ARZIGNANO VI (IT)
(74) Representative: Modiano, Micaela Nadia

(57) **Abstract**

A child car seat (1), comprising a supporting structure (10) which is provided with means for fixing to the seat of a car, and an accommodation body (2) which is extended along a longitudinal direction (100) and comprises a seat-like portion (3) and a backrest (4) which are mutually articulated about a main hinge axis (101) which is arranged transversely to the longitudinal direction (100), locking means (20) being provided for the accommodation body (2) in a first and in at least one second position, in which the seat-like portion (3) and the backrest (4) define, at the main articulation axis (101), respectively a first angle of mutual inclination and a second angle of mutual inclination which is different from the first angle of mutual inclination, the main articulation axis (101) being movable along a movement trajectory during the transition of the accommodation body (2) between the first and the at least one second position; the seating portion (3) is articulated so that it can rotate, about an oscillation axis (102) that is substantially parallel to the main articulation axis (101), to an end tab (5) at its longitudinal end (3b) that is opposite from the longitudinal end (3a) that is arranged proximate to the main articulation axis (101), the transition of the accommodation body (2) between the first and the at least one second position determining an angular rotation of the end tab (5) with respect to the seating portion (3) about the oscillation axis (102).

## Description

The present invention relates to a child car seat, for transporting children.

Child seats are known, and their use has now been mandatory for some time when it is desired to transport children in cars.

Such child seats are usually constituted by a seat structure inside which the child can be accommodated; the seat structure can be anchored, using devices of various kinds, to the seats of the car so as to ensure that, during the trip, the child seat (and as a consequence the child) is stably integral with the seat.

Among other things, child car seats are known which have a support base on which a backrest and a seating portion are arranged, which can be mutually inclined with respect to each other.

In some cases the support base and the backrest also define the supporting frame while, in other cases, there is a rigid containment body which accommodates the support base and the backrest, which are mutually articulated so as to be able to vary their mutual inclination.

With reference to the first type of child car seats, this is for example described in EP0853018 in the name of Aprica, or in EP3165400.

In turn, EP1481616 also describes a child car seat which is composed of a U-shaped support, which has a bottom and side walls which accommodate a seating body and a backrest. The seating body and the backrest are connected by way of a rotatable supporting body which is configured to allow the adjustment of the angle of inclination of the backrest with respect to the seating body.

With reference to the second type of child car seats, this is for example described in the USSN 6135553.

The known embodiments, although widely used nowadays, are not always devoid of drawbacks.

In particular, with reference to the embodiments that entail an outer containment shell, in order to ensure sufficient strength and rigidity of the internal accommodation, it is very often necessary to limit the inclination excursions between the seating body and the backrest, or to encumber the structure with extremely complex articulation assemblies.

The aim of the present invention is to provide a child car seat that is capable of improving the known art in one or more of the above mentioned aspects.

Within this aim, an object of the invention is to make available a child car seat that is capable of defining an accommodation that is extremely adaptable to the needs of the child.

Another object of the invention is to devise a child car seat that is extremely compact and has a reliable kinematic mechanism.

Another object of the invention is to provide a child car seat that is highly reliable, easy to implement and of low cost.

This aim and these and other objects which will become better apparent hereinafter are achieved by a child car seat according to claim 1, optionally provided with one or more of the characteristics of the dependent claims.

Further characteristics and advantages of the invention will become better apparent from the description of some preferred, but not exclusive, embodiments of the child car seat according to the invention, which are illustrated for the purposes of non-limiting example in the accompanying drawings wherein:
Figure 1 is a perspective view of the child car seat according to the invention in a first condition for use;
Figure 2 is a perspective view of the child car seat according to the invention in a second condition for use;

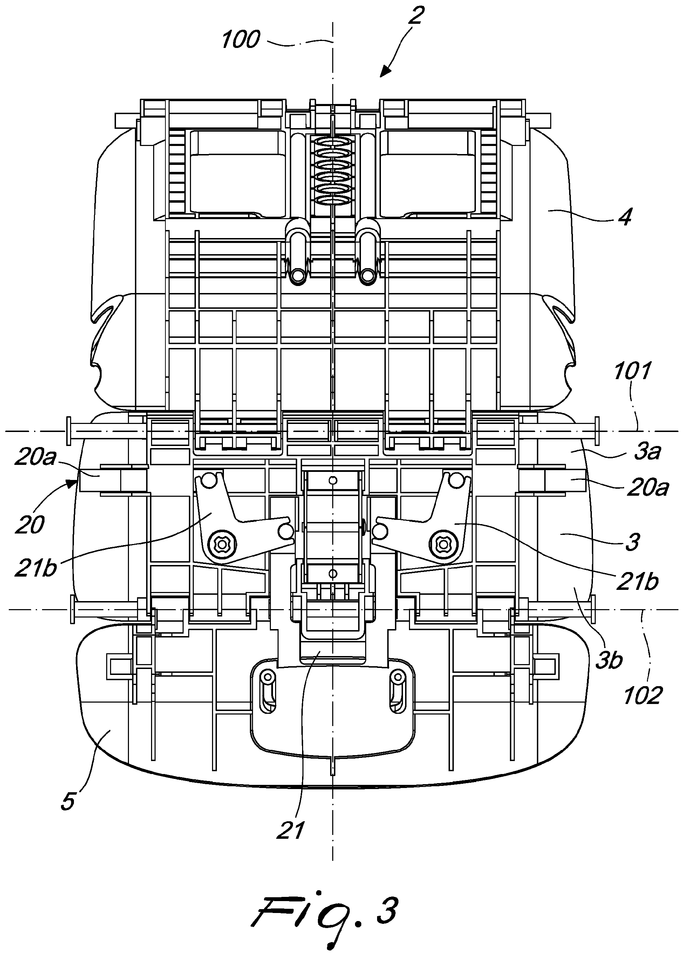

Figure 3 is a view from below of the accommodation body 2;
Figure 4 is a longitudinal cross-sectional view of the child car seat according to the invention in the first condition for use;
Figure 5 is a longitudinal cross-sectional view of the child car seat according to the invention in a second condition for use.

With reference to the figures, the child car seat according to the invention, generally designated by the reference numeral 1, comprises a supporting structure 10 with means for fixing to the seat of a car, and an accommodation body 2 which extends along a longitudinal direction 100.

The accommodation body 2 comprises a seat-like portion 3 and a backrest 4 which are mutually articulated about a main hinge axis 101 which is arranged transversely to the longitudinal direction 100.

The child car seat 1 comprises locking means 20 of the accommodation body 2 in a first and in at least one second position wherein the seat-like portion 3 and the backrest 4 define, at the main articulation axis 101, respectively a first angle of mutual inclination and a second angle of mutual inclination which is different from the first angle of mutual inclination.

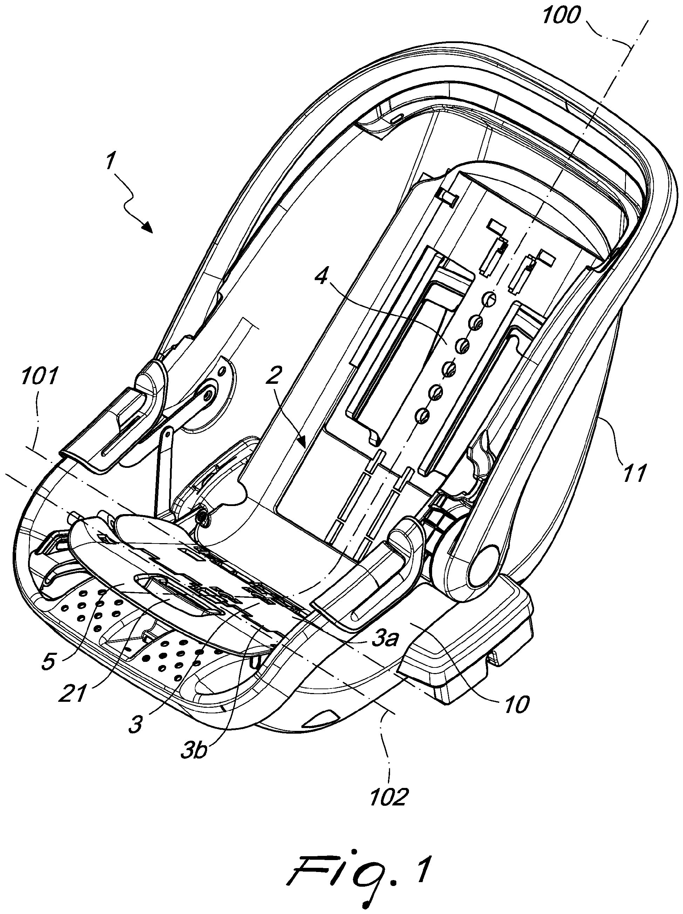

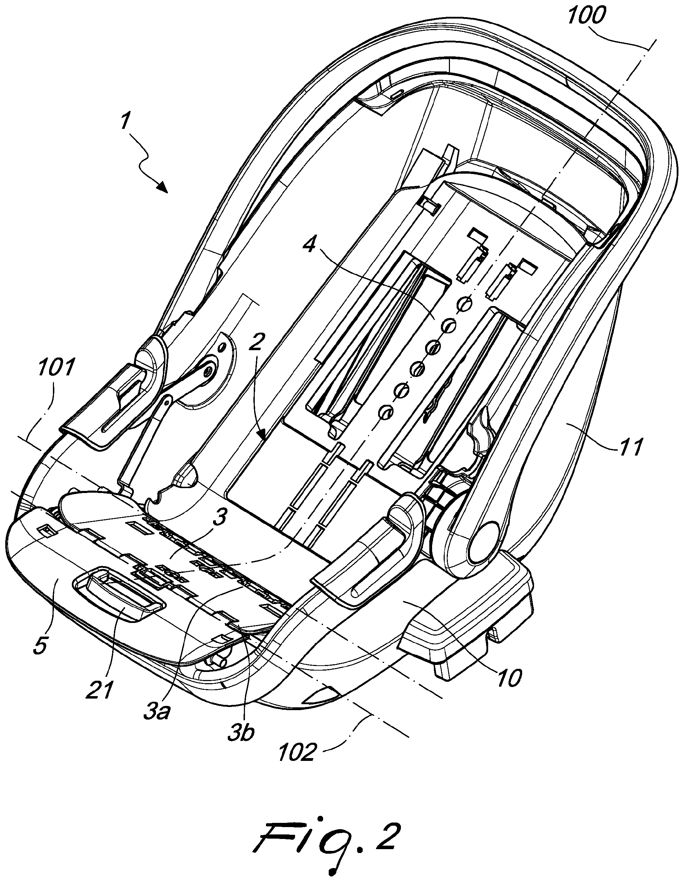

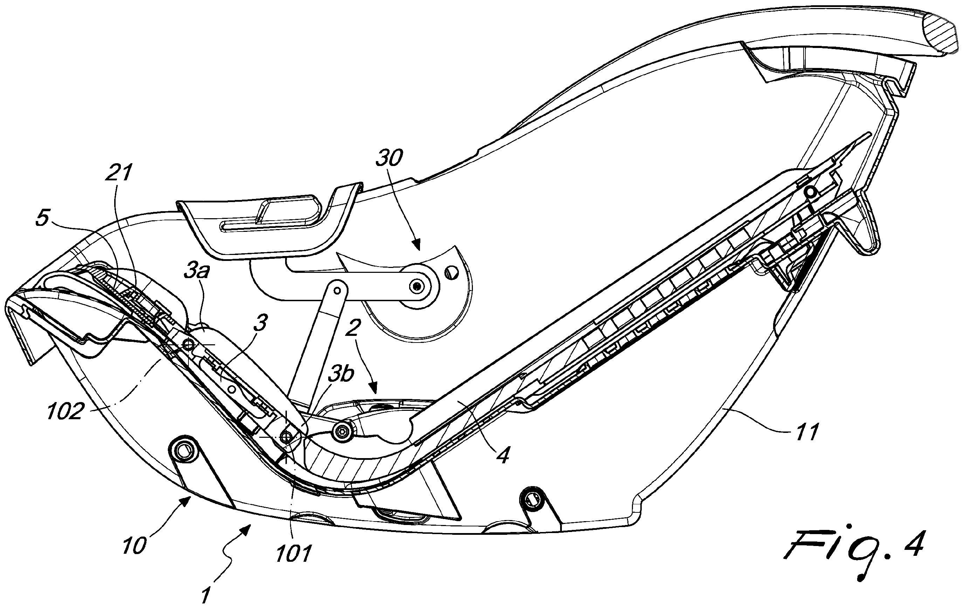

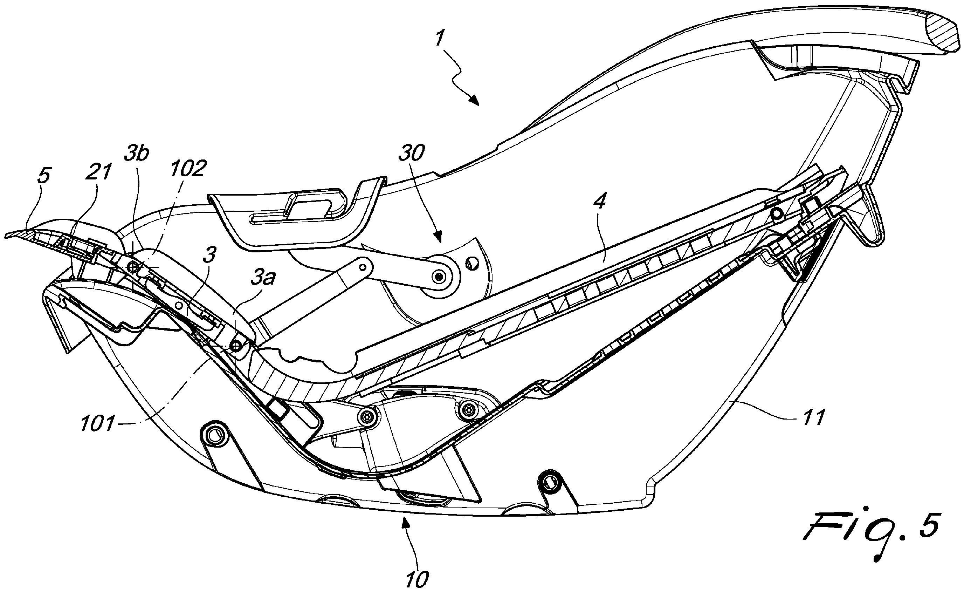

In particular, in the first position, as shown in Figures 1 and 4, the seat-like portion 3 and the backrest 4 define a first angle for allowing the child to be arranged in a sitting position, while in the second position, shown in Figures 2 and 5, the angle defined between the seat-like portion 3 and the backrest 4 is greater so as to allow the child to be arranged in a reclined, or partially reclined, position.

The main articulation axis 101, during the transition of the accommodation body 2 between the first and the at least one second position, can move along a movement trajectory.

In particular, the points that define the main articulation axis 101 can move along the above-mentioned movement trajectory, which lies on a plane that is substantially parallel to the longitudinal direction 100 and perpendicular to the main articulation axis 101.

According to the present invention, the seat-like portion 3 is articulated so that it can rotate, about an oscillation axis 102 that is substantially parallel to the main articulation axis 101, to an end tab 5 at its longitudinal end 3b that is opposite from the longitudinal end 3a that is arranged proximate to the main articulation axis 101.

In particular, the transition of the accommodation body 2 between the first and the at least one second position determines an angular rotation of the end tab 5 with respect to the seat-like portion 3 about the oscillation axis 102.

According to a preferred practical embodiment shown in the figures, the end tab 5 supports an actuation element 21 of the locking means 20.

By way of example, the locking means 20 comprise at least one locking element 20a, supported by the accommodation body 2, which is adapted to pass on command between an engagement condition, in which it engages selectively in a respective engagement seat defined on the supporting structure 10, and a disengagement condition, in which it is disengaged from the respective engagement seat in order to allow the movement of the accommodation body 2 between the first and the at least one second position.

Preferably, as shown in the figures, the locking means comprise two locking elements 20a, arranged at opposite sides of the accommodation body 2.

Preferably, the locking elements 20a are supported by the seat-like portion 3.

Advantageously, the locking element or elements 20a are, in the disengagement condition, retracted into the lateral space occupation of the accommodation body 2, while in the engagement condition they are protruding with an engagement head thereof in order to engage by snap action and selectively in a respective seat.

With reference to the embodiment shown in the figures, the actuation element 21, for example constituted by a handle, is connected, by way of kinematic connection means 21b, to the locking element 20a in order to command the transition of the locking element 20a from the engagement condition to the disengagement condition.

Preferably, there are elastic loading means which act on the locking element or elements 20a and are adapted to keep them in the engagement condition, while the actuation element 20, when actuated, acts in contrast with the above-mentioned elastic loading means in order to temporarily move the locking element or elements 20a to the disengagement condition, so as to be able to move the accommodation body 2 from the first to the second position and/or vice versa.

With reference to the embodiments shown in the figures, the angle of inclination between the seating portion 3 and the backrest 4 in the second position (the reclined or semi-reclined position) is greater than the angle of inclination between the seating portion 3 and the backrest 4 in the first position (the sitting position).

In the second position of the accommodation body 2, the end tab 5 is angularly spaced further apart from the seating portion 3 with respect to when the accommodation body 2 is in the first position.

In particular, in the first position the end tab 5 lies substantially on the same plane as the seating portion 3 so as to ensure greater stability for the child, while when the accommodation body 2 is brought to the second position (the reclined or semi-reclined position) the end tab 5 is brought to a downward-folded position so as to ensure greater comfort and more space for the legs of the child.

Conveniently, the supporting structure 10 comprises a shell-shaped enclosure 11 for the accommodation of the accommodation body 2.

Preferably, the supporting structure 10 defines a first sliding guide path for a first shaft which defines the main articulation axis 101 in order to guide the main articulation axis along the movement trajectory during the transition of the accommodation body 2 between the first and the second position and vice versa.

The first guide path can extend along a straight trajectory (as in the embodiment shown in the figures) or along a curved trajectory.

Conveniently, the supporting structure 10 defines at least one second sliding guide path for a second shaft which defines the oscillation axis 102 in order to guide it during the transition of the accommodation body 2 between the first and the second position.

It is also possible to have the supporting structure 10 define at least one third sliding guide path for a respective engagement element which is supported by the backrest 4 during the transition of the accommodation body 2 between the first and the second position.

The use of the child car seat 1, according to the invention, is the following.

The supporting structure 10 makes it possible to stably anchor the child car seat 1 to the seat of a car.

If the user should wish to bring the accommodation body 2 from the first position to the second position or vice versa, he or she acts on the actuation device 21 so as to bring the locking means 20a to the disengagement position.

If, as it is preferable, the actuation device 21 is integral with the end tab 5, then while the user acts on such actuation device 21, he/shecan move the accommodation body 2 along the longitudinal direction 100 and as a consequence enable the transition from the first to the second position and vice versa.

The transition of the accommodation body 2 from the first to the second position and vice versa simultaneously determines the rotation about the oscillation axis 102 of the end tab 5 with respect to the seating portion 3.

It is also possible to associate the child car seat 1 with safety means 30 which are adapted to prevent the possibility of associating the seat belts with through loops 3a which are defined on the supporting structure 10 if the accommodation body 2 is in the second position (reclined or semi-reclined).

This is to prevent users from fastening the child seat to car seats using only the seat belts of the car itself when it is reclined or semi-reclined, thus limiting the use of the reclined or semi-reclined configuration to use on a stroller or, if it is used on the seats of a car, only if it is stably coupled to an adapted car base (typically fixed by way of ISOFIX attachments to the chassis of the car).

Such safety means 30 can comprise a lever mechanism 32, 33 which can be actuated by the accommodation body 2 during the transition from the first position toward the second position, which is adapted to move an element 31 for blocking access of the seat belt to the through loop 31a.

Conveniently, such safety means 30 are further configured to prevent the transition of the accommodation body 2 from the first to the second position (reclined or semi-reclined), even if the seat belts are already associated with the through loop, in that such seat belts prevent the movement of the element 31 for blocking access and therefore, as a consequence, they prevent the movement of the accommodation body 2 toward the second position.

According to a further aspect, the present invention relates to a child car seat, generally designated by the reference numeral 1, which comprises a supporting structure 10 with means for fixing to the seat of a car, and an accommodation body 2 which extends along a longitudinal direction 100.

The accommodation body 2 comprises a seat-like portion 3 and a backrest 4 which are mutually articulated about a main hinge axis 101 which is arranged transversely to the longitudinal direction 100.

The child car seat 1 comprises locking means 20 of the accommodation body 2 in a first and in at least one second position wherein the seat-like portion 3 and the backrest 4 define, at the main articulation axis 101, respectively a first angle of mutual inclination and a second angle of mutual inclination which is different from the first angle of mutual inclination.

In particular, in the first position, as shown in Figures 1 and 4, the seat-like portion 3 and the backrest 4 define a first angle for allowing the child to be arranged in a sitting position, while in the second position, shown in Figures 2 and 5, the angle defined between the seat-like portion 3 and the backrest 4 is greater so as to allow the child to be arranged in a reclined, or partially reclined, position.

The child car seat 1 further comprises safety means 30 which are adapted to prevent the possibility of associating the seat belts with through loops 3a which are defined on the supporting structure 10 if the accommodation body 2 is in the second position (reclined or semi-reclined).

This is to prevent users from fastening the child seat in a car, using the seat belts of the car itself, when the accommodation body 2 is reclined (or semi-reclined), thus limiting the use of the reclined or semi-reclined configuration to use on a stroller or, if it is used on the seats of a car, only if it is stably coupled to an adapted car base (typically fixed by way of ISOFIX attachments to the chassis of the car).

Such safety means 30 can comprise a lever mechanism 32, 33 which can be actuated by the accommodation body 2 during the transition from the first position toward the second position, which is adapted to move an element 31 for blocking access of the seat belt to the through loop 31a.

Conveniently, such safety means 30 are further configured to prevent the transition of the accommodation body 2 from the first to the second position (reclined or semi-reclined), even if the seat belts are already associated with the through loop, in that such seat belts prevent the movement of the element 31 for blocking access and therefore, as a consequence, they prevent the movement of the accommodation body 2 toward the second position.

In practice it has been found that the invention fully achieves the intended aim and objects by providing a child car seat that is extremely comfortable and reliable in use.

The invention thus conceived is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. 102021000025496 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A child car seat (1), comprising a supporting structure (10) which is provided with means for fixing to the seat of a car, and an accommodation body (2) which is extended along a longitudinal direction (100) and comprises a seat-like portion (3) and a backrest (4) which are mutually articulated about a main hinge axis (101) which is arranged transversely to said longitudinal direction (100), locking means (20) being provided for said accommodation body (2) in a first and in at least one second position, in which said seating portion (3) and said backrest (4) define, at said main articulation axis (101), respectively a first angle of mutual inclination and a second angle of mutual inclination which is different from said first angle of mutual inclination, said main articulation axis (101) being movable along a movement trajectory during the transition of said accommodation body (2) between said first and said at least one second position, **characterized in that** said seating portion (3) is articulated so that it can rotate, about an oscillation axis (102) that is substantially parallel to said main articulation axis (101), to an end tab (5) at its longitudinal end (3b) that is opposite from the longitudinal end (3a) that is arranged proximate to said main articulation axis (101), the transition of said accommodation body (2) between said first and said at least one second position determining an angular rotation of said end tab (5) with respect to said seating portion (3) about said oscillation axis (102).

2. The child safety seat (1) according to claim 1, **characterized in that** points that define said main articulation axis (101) lie on a plane that is substantially parallel to said longitudinal direction (100) and perpendicular to said main articulation axis (101).

3. The child safety seat (1) according to one or more of the preceding claims, **characterized in that** said end tab (5) supports an actuation element (21) of said locking means (20).

4. The child safety seat (1) according to one or more of the preceding claims, **characterized in that** said locking means (20) comprise at least one locking element (20a) which is supported by said accommodation body (2) and is adapted to pass on command between an engagement condition, in which it engages selectively in a respective engagement seat defined on said supporting structure (10), and a disengagement condition, in which it is disengaged from the respective engagement seat in order to allow the movement of said accommodation body (2) between said first and said at least one second position.

5. The child safety seat (1) according to one or more of the preceding claims, **characterized in that** said actuation element (21) is connected, via kinematic connection means (21b), to said at least one locking element (20a) in order to actuate the transition of said locking element (20a) from said engagement condition to said disengagement condition.

6. The child safety seat (1) according to one or more of the preceding claims, **characterized in that** the angle of inclination between said seating portion (3) and said backrest (4) in said second position is greater than the angle of inclination between said seating portion (3) and said backrest (4) as a consequence of the transition from said first to said second position, in said second position, said end tab (5) being angularly spaced further apart from said seating portion (3) with respect to said first position.

7. The child safety seat (1) according to one or more of the preceding claims, **characterized in that** said supporting structure (1) comprises a shell-shaped enclosure (11) for the accommodation of said accommodation body (2).

8. The child safety seat (1) according to one or more of the preceding claims, **characterized in that** said supporting structure (10) defines a first sliding guide path for a first shaft which defines said main articulation axis (101) in order to guide said main articulation axis along said movement trajectory during the transition of said accommodation body (2) between said first and said second position.

9. The child safety seat (1) according to one or more of the preceding claims, **characterized in that** said supporting structure (10) defines at least one second sliding guide path for a second shaft which defines said oscillation axis (102) in order to guide it during the transition of said accommodation body (2) between said first and said second position.

10. The child safety seat (1) according to one or more of the preceding claims, **characterized in that** said supporting structure (2) defines at least one third sliding guide path for a respective engagement element which is supported by said backrest (4) during the transition of said accommodation body (2) between said first and said second position.

11. The child safety seat (1) according to one or more of the preceding claims, **characterized in that** it comprises safety means (30) which are adapted to prevent the possibility of associating the seat belts with through loops (31a) which are defined on said supporting structure (10) if said accommodation body (2) is in said second position.

12. The child safety seat (1) according to one or more of the preceding claims, **characterized in that** said safety means (30) comprise a lever mechanism (32, 33) which can be actuated by the accommodation body (2) during the transition from said first position toward said second position, said lever mechanism (32, 33) being adapted to move an element (31) for blocking access of the seat belt to said through loop (31a).

13. The child safety seat (1) according to one or more of the preceding claims, **characterized in that** said safety means (30) are configured to prevent the transition of said accommodation body (2) from the first to the second position even if the seat belts are associated with said through loop.
